# EUROPEAN PATENT SPECIFICATION

(11) **EP 3 219 901 B1**
(45) Date of publication and mention of the grant of the patent: **12.12.2018**
(21) Application number: 16160150.5
(22) Date of filing: 14.03.2016
(51) Int. Cl.: E06B 9/72, F16H 3/44

(54) **A TUBULAR MOTOR DRIVE FOR A SCREENING DEVICE AND A SCREENING DEVICE**
RÖHRENFÖRMIGER MOTORANTRIEB FÜR EINE SCREENING-VORRICHTUNG UND SCREENING-VORRICHTUNG
ENTRAÎNEMENT DE MOTEUR TUBULAIRE DESTINÉ À UN DISPOSITIF D'ÉCRAN ET DISPOSITIF D'ÉCRAN

(43) Date of publication of application: 20.09.2017
(73) Proprietor: VKR Holding A/S, 2970 Hørsholm (DK)
(72) Inventor: SKALLEBÆK, Henrik, DK-7321 Gadbjerg (DK); LAURIDSEN, Nikolaj Hannibal, DK-7400 Herning (DK)
(74) Representative: Patentgruppen A/S

(56) References cited:
- EP-A2- 0 976 909
- US-B1- 6 379 276

## Description

### Background of the invention

The invention relates to a tubular motor drive for a screening device for screening an architectural opening such as a window. The tubular motor drive comprises a first gear set and an electrical motor including an output shaft.

The invention further relates to a screening device.

### Description of the Related Art

Motorised screening devices for windows are known in the art e.g. to quickly black out a room or just to simplify the operation of curtains, blinds or the like - typically in relation with some sort of wired or wireless remote control. And particularly in relation with roof windows and skylights the demand for motorized screening devices is pronounced because these types of windows usually are mounted in a relatively remote part of a building and therefore often are difficult to reach or access.

From the patent US 6,379,276 B1 it is known to provide a screening device with a gear motor comprising an electrical motor and several gear stages. However, this gear motor design is not optimal regarding noise generation.

An object of the invention is therefore to provide for a motor drive for screening device with a better design regarding noise generation.

### The invention

The invention provides for a tubular motor drive for a screening device. The tubular motor drive comprises an electrical motor including an output shaft and a first gear set formed as a gear reducer comprising two or more gear reducer stages arranged to be driven by the output shaft, wherein each of the two or more gear reducer stages comprises at least two meshing gears having different module and wherein the rotational axis of the at least two meshing gears are fixed in relation to the output shaft. The tubular motor drive further comprises a second gear set formed as a planetary gear comprising one or more planetary gear stages, wherein the first gear set is arranged to drive the second gear set through a common centrally arranged drive connection suspended independent from the output shaft.

During normal operation the output shaft will rotate at high speed and the first high speed meshing gears in such a motor drive is therefore one of the main noise propagator in motorised screening devices.

Thus, by suspending the drive connection between the first gear set and the second gear set independent from the output shaft it is possible to reduce the propagation of high module vibrations origination from the electrical motor or from the first gear set. I.e. the transmittal of vibrations from the motor and the first gear stage to the next gear set is reduced - thus reducing the overall noise propagation from the motor drive.

Furthermore, the present motor drive design ensures high efficiency and requires less power.

It should be noted that the term "*having different module*" in this context should be interpreted as at least two meshing gears of the same gear reducer stage having different module. The present wording does not exclude that non-meshing gears or gears of different gear stages can have the same module.

It should also be noted that the term "*gear reducer*" in this context should be interpreted as a transmission in its simplest form comprising two meshing gears, wherein the driving gear of the two meshing gears has smaller module than the driven gear so that the number of revolutions is reduced, in that the driven gear will rotate fewer times that the driving gear due to the different module. A further characteristic of a gear reducer is that the rotational axis of the driving and the driven gear are mutually fixed.

In an aspect of the invention, the common centrally arranged drive connection is suspended by a mounting device releasably connected to the electrical motor.

Suspending the drive connection by means of a mounting device releasably connected to the electrical motor is advantageous in that it hereby is possible to form the motor drive as a single interconnected device - thus simplifying logistics, installations and other and still ensure low noise propagation.

In an aspect of the invention, a first gear of a first gear reducer stage of the two or more gear reducer stages is rotatably fixed in relation to the output shaft, wherein the first gear of the first gear reducer stage is arranged to mesh with a second gear of the first gear reducer stage, and wherein the second gear is suspended by the mounting device.

By also suspending the second gear of the first gear reducer stage by the mounting device a simple and cost-efficient gear design is ensured. Furthermore, noise propagation is reduced.

In an aspect of the invention, the second gear of the first gear reducer stage is rotatably fixed in relation to a first gear of a second gear reducer stage of the two or more gear reducer stages, so that the first gear of the second gear reducer stage is also suspended by the mounting device.

Fixing the second gear of the first gear reducer stage with the first gear of the second gear reducer stage is advantageous in that simple and strong torque transfer between the gear stages is hereby ensured and in that the two gears can then be suspended by the same suspension - e.g. by the same shaft - thus ensuring a simple gear design.

In an aspect of the invention, the mounting device comprises housing means substantially encircling the first gear set.

Forming the mounting device so that it encircles the first gear set is advantageous in that the mounting device hereby can act as housing means shielding the first gear set from the surroundings.

In an aspect of the invention, meshing gears of a first gear reducer stage of the two or more gear reducer stages are formed as helical gears.

Although helical gears are expensive and more complex to assemble it is advantageous to form at least the first meshing gear set with angled teeth in that such gears will engage more gradually than e.g. common spur gear teeth, causing them to run more smoothly and quietly.

In an aspect of the invention, the common centrally arranged driving connection comprises a wall separating the first gear set from the second gear set.

Separating the first gear set from the second gear set by means of a wall is advantageous in that such a wall will reduce noise propagation from the noisier first gear set and further forward in the motor drive.

In an aspect of the invention, the common centrally arranged driving connection comprises a second gear of a gear reducer stage of the two or more gear reducer stages and a sun gear of a first planetary gear stage of the second gear set and wherein the second gear of the gear reducer stage is rotatably fixed in relation to the sun gear of the first planetary gear stage.

Fixing the second gear second gear of a gear reducer stage of the two or more gear reducer stages with the sun gear of the first planetary gear stage of the second gear set is advantageous in that simple and strong torque transfer between the two gear sets is hereby ensured and in that the two gears can then be suspended by the same suspension - e.g. by the same shaft - thus ensuring a simple gear design.

In an aspect of the invention, the output shaft is substantially coaxial with the second gear of the gear reducer stage of the two or more gear reducer stages and the sun gear of the first planetary gear stage of the second gear set.

Forming these gears coaxial with the output shaft is advantageous in that it enables a slenderer and more compact motor drive design.

The invention further relates to a screening device for screening an architectural opening such as a window, comprising a tubular motor drive according to any of the previously mentioned tubular motor drives.

Noise propagated from the tubular motor drive in a screening device can easily be further propagated or amplified by the structure of the screening device and further into the large surface area of the window which then can serve as an excellent amplifier. Thus, it is particularly advantageous to use a motor drive according to the present invention in relation with screening device for screening an architectural opening.

### Figures

The invention will be described in the following with reference to the figures in which
- fig. 1: illustrates cross section through the middle of a partly exploded tubular motor drive, as seen in perspective,
- fig. 2: illustrates cross section through the middle of an assembled tubular motor drive, as seen in perspective,
- fig. 3: illustrates a partly exploded tubular motor drive, as seen in perspective,
- fig. 4: illustrates the partly exploded tubular motor drive of fig. 3 shown from another angle,
- fig. 5: shows parts of an example of a screening device, as seen in perspective, and
- fig. 6: shows another example of a screening device, as shown in perspective.

### Detailed description of the invention

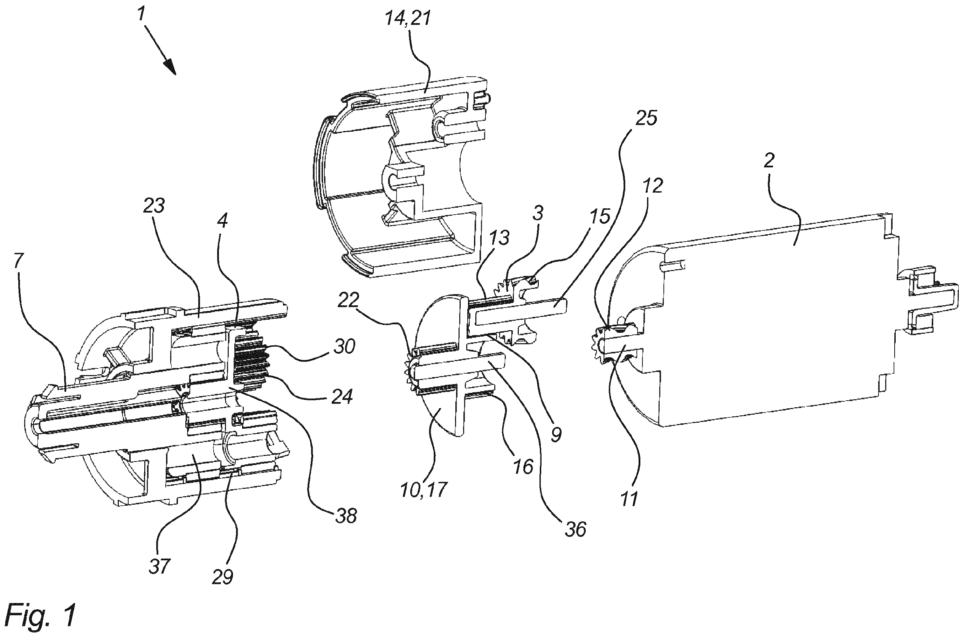

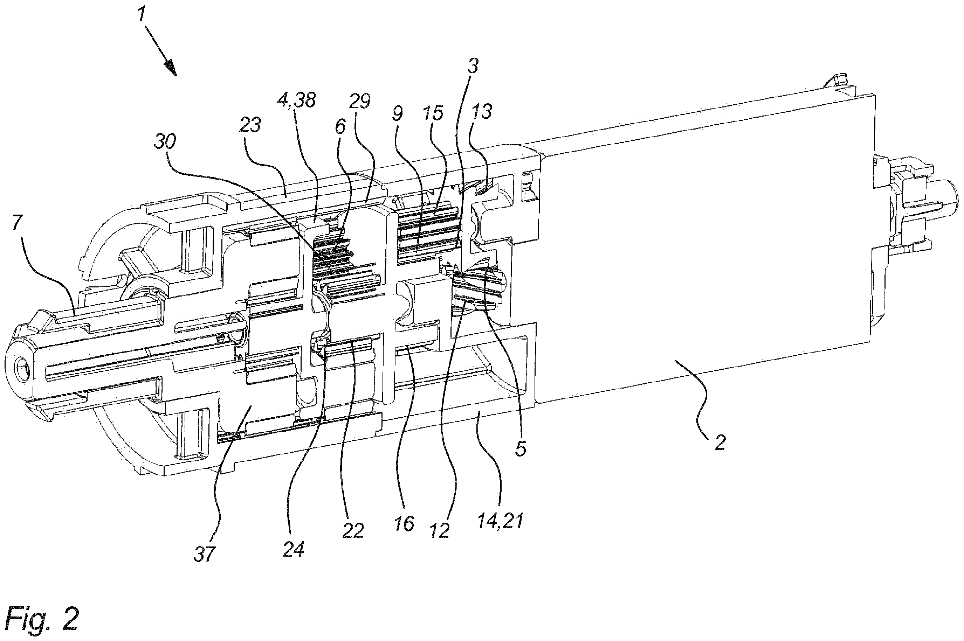

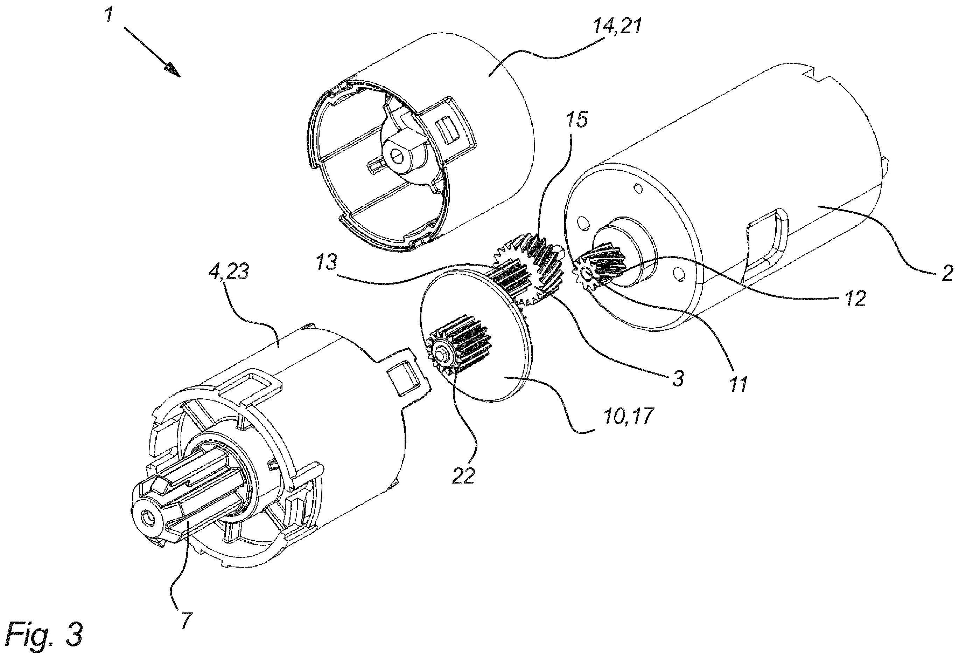

Fig. 1 illustrates cross section through the middle of a partly exploded tubular motor drive, as seen in perspective, fig. 2 illustrates cross section through the middle of an assembled tubular motor drive, as seen in perspective and fig. 3 illustrates a partly exploded tubular motor drive, as seen in perspective.

In this embodiment the tubular motor drive 1 comprises an electrical motor 2 having an output shaft 11 being driven by the motor when operating. The motor 2 is arranged to drive a first gear set 3 which in this case comprises two gear reducer stages 5, 9 - i.e. in this embodiment a first gear 12 of the first gear reducer stage 5 is rigidly mounted to the output shaft 11, so that this first gear 12 may act as a driving gear of the first gear reducer stage 5 in that the first gear 12 meshes with a second gear 15 of the first gear reducer stage 5, wherein the module of the second gear 15 is considerably bigger than the module of the first gear 12 so that the RPM (revolutions per minute) is reduced through the first gear reducer stage 5. In another embodiment the first gear set 3 may comprise more than two gear reducer stages such as three, four or more.

In this embodiment the second gear 15 of the first gear reducer stage 5 is formed integrally with the first gear 13 of a second gear reducer stage 9 so that both of these gears 13, 15 can be suspended by the same offset shaft 25. However, in another embodiment the second gear 15 of the first gear reducer stage 5 could be formed independent from the first gear 13 of a second gear reducer stage 9 and the torque would be transferred by other means - such as a dedicated shaft.

In this embodiment these integrally formed gears 13, 15 are rotating in relation to the fixed offset shaft 25 but in another embodiment the offset shaft 25 could be formed integrally with the gears 13, 15 or the offset shaft 25 could at least be fixed in relation to the gears 13, 15, so that the offset shaft 25 would have to be rotatably suspended in its mount.

In this embodiment the module of the second gear 15 of the first gear reducer stage 5 is considerably bigger than the module of the first gear 13 of a second gear reducer stage 9 so that when the first gear 13 of a second gear reducer stage 9 mesh with a second gear 16 of a second gear reducer stage 9 - wherein the module of the second gear 16 again is considerably bigger than the module first gear 13 - the RPM of the second gear 16 of a second gear reducer stage 9 is considerably reduced in relation to the RPM of the output shaft. In this embodiment the total gearing of the first gear set 3 is around 1:9 but in another embodiment this gearing could be both lower or higher.

In this embodiment the first gear set 3 is arranged to drive the second gear set 4 in that the second gear 16 by means of a common centrally arranged drive connection 10. In this embodiment the common centrally arranged drive connection 10 comprises the second gear reducer stage 9 which is formed integrally with the sun gear 22 of a first planetary gear stage 24 of the second gear set 4 so that both of these gears 16, 22 can be suspended by the same centre shaft 36. However, in another embodiment the second gear 16 of the second gear reducer stage 9 could be formed independent from the sun gear 22 of the first planetary gear stage 24 and the torque would be transferred by other means - such as a dedicated shaft.

In this embodiment the common centrally arranged drive connection 10 is suspended by a mounting device 21 formed as housing means 14 to the first gear set 3. However, in another embodiment the mounting device 21 would also or instead act as housing to the second gear set 4 and/or further gear sets or the mounting device 21 would only act as housing to a single gear stage 5, 9, 24, 37 or the mounting device 21 would not comprise housing means 14.

In this embodiment the mounting device 21 is rigidly connected to the electrical motor 2 by means of screws (not shown) enabling that the position of the common centrally arranged drive connection 10 is substantially rigidly fixed in relation to the output shaft 11. However, in another embodiment the mounting device 21 could be formed integrally with the electrical motor 2 or the mounting device 21 could instead or also be connected to or formed integrally with the second gear set 4, a further gear set or another part of the tubular motor drive 1.

In this embodiment the second gear 15 of the first gear reducer stage 5 which is formed integrally with the first gear 13 of a second gear reducer stage 9 is also suspended by the mounting device through the offset shaft 25 to reduce number of parts and simplify assembly. However, in another embodiment these gears 15, 13 could also or instead be suspended by other means such as directly by the electrical motor 2, by the second gear set 4, a further gear set or another part of the tubular motor drive 1.

In this embodiment the first gear 12 and second gear 15 of the first gear reducer stage 5 are formed as helical gears whereas all the other gears in the gear sets 3, 4 are formed as normal spur gears. However, in another embodiment some or all the gears 12, 13, 15, 16, 22 could be any type of gear such as spur, helical, double helical, bevel, face, worm or another gear type or the gear sets 3, 4 could comprise any combination thereof.

In this embodiment the common centrally arranged drive connection 10 comprises a wall 17 separating the first gear set 3 from the second gear set 4 to reduce noise propagation. However, in another embodiment the tubular motor drive 1 would not comprise a wall 17 or the wall would instead or also be connected to or formed integrally with the mounting device 21, the second gear set 4, a further gear set or another part of the tubular motor drive 1.

In this embodiment the tubular motor drive 1 comprises two planetary gear stages 24, 37 but in another embodiment the motor drive 1 would only comprise a single planetary gear stage 6, 24 or the motor drive 1 could comprise further planetary gear stages.

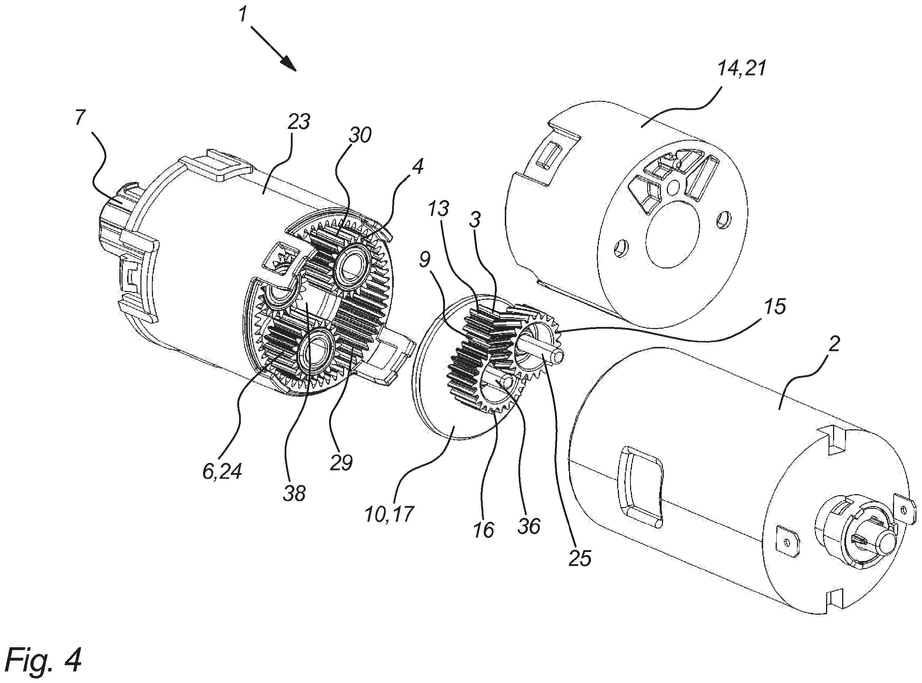

Fig. 4 illustrates the partly exploded tubular motor drive of fig. 3 shown from another angle.

In this embodiment the tubular motor drive 1 comprises two gear sets 3, 4 but in another embodiment the motor drive 1 could comprise further gear sets of the planetary type, of the gear reducer type or of another gear type

In this embodiment the planetary gear stages 24, 37 comprises fixed sun gear 22 and ring gear 29 in between which the planet gears 30 rotates on a common planet carrier 38. However, in another embodiment on or more of the planetary gear stages 24, 37 could be designed in another way e.g. with fixed planet gears 30 and rotating ring gear 29.

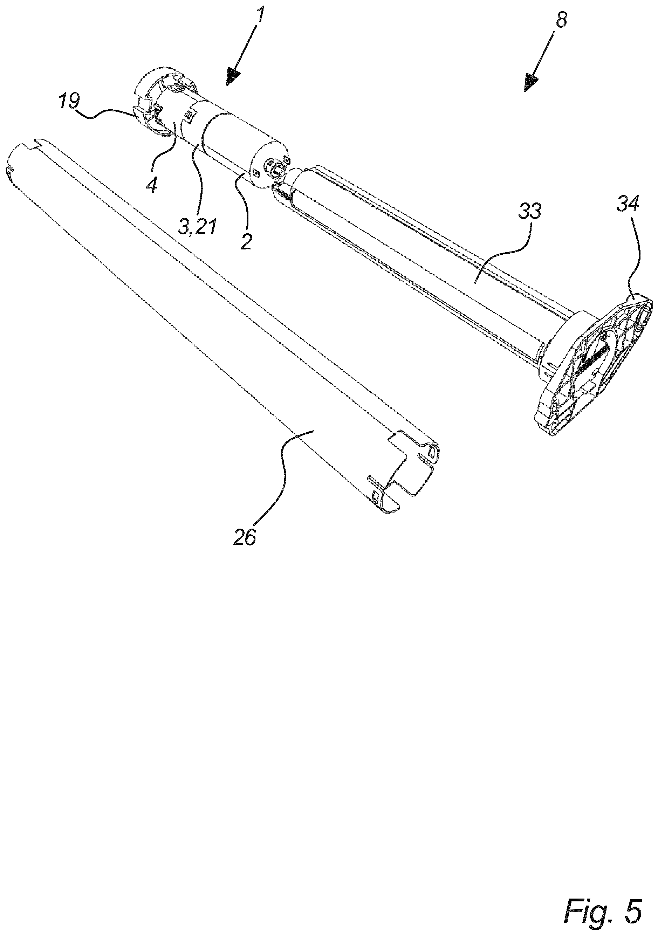

Fig. 5 shows an example of a screening device 8 for screening an architectural opening, such as a window. The screening device 8 comprises the tubular motor drive 1 being arranged to displace screening means (not shown). The screening device 8 comprises a motor tube 26. The motor tube 26 is shown removed from the rest of the screening device 8. When assembled, the interior of the motor tube 26 contains the rest of the screening device 8.

The screening device 8 further comprises a reel connector 19 arranged to connect with the coupling means 7 and, therefore, arranged to be rotated by the coupling means 7. The reel connector 19 is arranged to connect with and to rotate a screening roller, tube, cylinder, or other reel means (not shown) arranged to be rotated around a longitudinal rotational axis by means of the tubular motor drive 1. A first end 20 of the screening means 18 is connected to this reel means so that the screening means 18 can be rolled off or rolled up around the reel means dependent on a rotational direction of the reel means. In this example, the reel means circumscribes the motor tube 26 and extends from the reel connector 19 along the length of the motor tube 26. Accordingly, the screening device 8 may be, or form part of, e.g. a roller shutter, an awning, a retractable awning, a roller blind or other screening device.

According to this example, the screening device 8 comprises the motor 2, the first and second sets 3, 4 and a power module 33. The tubular motor drive 1 and the power module 33 are arranged to substantially extend the entire length of the motor tube 26. According to this example, the far end of the motor tube 26 is formed to engage with an engagement portion of the tubular motor drive 1 and the closest end is arranged to engage with e.g. a bracket 34 intended for being connected with a window part. Thereby, the motor tube 26, the tubular motor drive 1, the power module 33 and the bracket 34 are all stationary while the reel connector 19 is free to rotate and, thereby, to displace a screening means, e.g. via a screening means rolled up on screening roller, where the screening roller is arranged to be rotatably driven by the coupling means 7. According to this example, the tubular motor drive 1 is arranged to displace the screening means 18 by rotating the screening means.

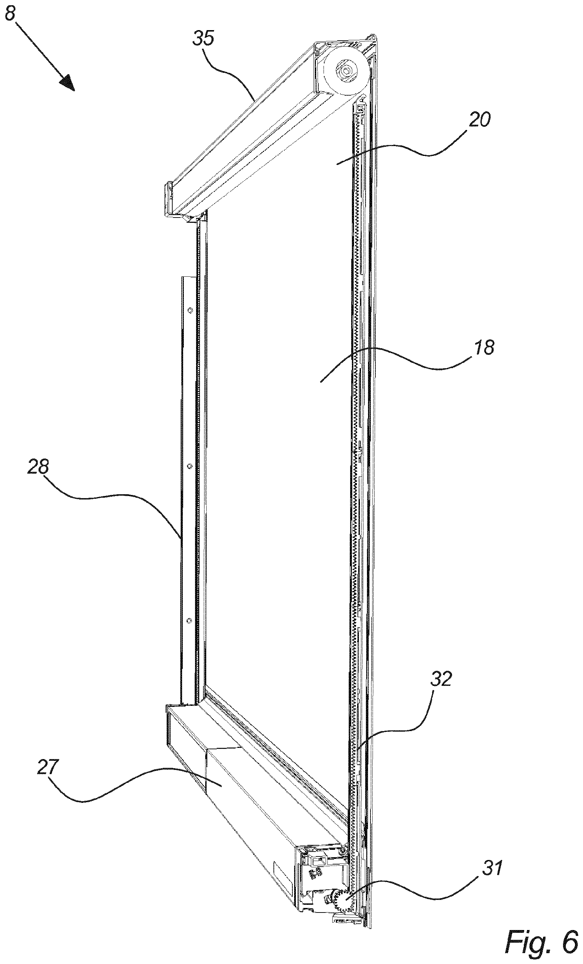

Fig. 6 shows another screening device 8 for screening an architectural opening. The screening device 8 comprises the tubular motor drive 1 being arranged to displace the screening means 18, which in this case is a roller blind. However, in another embodiment the screening means could be any kind of screen suited for screening a window i.e. any kind of curtain, drape, blind, shade, shutter, awning or other or any combination thereof.

In this embodiment the screening device 1 is mounted on an architectural opening 2 in the form of a roof window, however in another embodiment the architectural opening 2 could be a wall window, a door, a hole in a wall or roof surface, an emergency exit or other and/or the architectural opening 2 could be arranged in a wall, a floor or another part of a building.

The screening device 8 comprises a first transversal profile 35 having a fixed position relative to the window (not shown) and a second transversal profile 27 which is moveably arranged relative to the first transversal profile 35. The screening device 1 further comprises a screening means 18 extending between the first and second transversal profiles. A first end 20 of the screening means is connected to the first transversal profile, e.g. to a screening roller. In this example of a screening device 8, the tubular motor drive 1 is comprised by the second transversal profile 27 and the tubular motor drive 1 is arranged to move the second transversal profile 27, e.g. by means of gear wheels 31 arranged at opposite ends of the second transversal profile 27 to engage with corresponding racks 32 arranged at opposite horizontal sides in the window. According to this example, the tubular motor drive 1 is arranged to displace the screening means 18 by moving the second transversal profile 27.

The invention has been exemplified above with reference to specific examples of designs and embodiments of screening devices 1, motor drives 1, gear sets 3, 4 etc. However, it should be understood that the invention is not limited to the particular examples described above but may be designed and altered in a multitude of varieties within the scope of the invention as specified in the claims.

### List

1. Tubular motor drive
2. Electrical motor
3. First gear set
4. Second gear set
5. First gear reducer stage
6. Planetary gear stage
7. Coupling means
8. Screening device
9. Second gear reducer stage
10. Common centrally arranged drive connection
11. Output shaft of electrical motor
12. First gear of first gear reducer stage
13. First gear of second gear reducer stage
14. Housing means
15. Second gear of first gear reducer stage
16. Second gear of second gear reducer stage
17. Wall
18. Screening means
19. Reel connector
20. First end of screening means
21. Mounting device
22. Sun gear
23. Second tubular housing
24. First planetary gear stage
25. Offset shaft
26. Motor tube
27. Second transversal profile
28. Guide means
29. Ring gear
30. Planet gears
31. Toothed wheel
32. Rack
33. Power module
34. Bracket
35. First transversal profile
36. Centre shaft
37. Second planetary gear stage
38. Planet carrier

## Claims

1. A tubular motor drive (1) for a screening device (8), said tubular motor drive (1) comprises
an electrical motor (2) including an output shaft (11),
a first gear set (3) formed as a gear reducer comprising two or more gear reducer stages (5, 9) arranged to be driven by said output shaft (11), wherein each of said two or more gear reducer stages (5, 9) comprises at least two meshing gears (12, 13, 15, 16) having different module and wherein the rotational axis of said at least two meshing gears (12, 13, 15, 16) are fixed in relation to said output shaft (11),
a second gear set (4) formed as a planetary gear comprising one or more planetary gear stages (6), **characterized in that** said first gear set (3) is arranged to drive said second gear set (4) through a common centrally arranged drive connection (10) suspended independent from said output shaft (11).

2. A tubular motor drive (1) according to claim 1, wherein said common centrally arranged drive connection (10) is suspended by a mounting device (21) releasably connected to said electrical motor (2).

3. A tubular motor drive (1) according to claim 2, wherein a first gear (12) of a first gear reducer stage (5) of said two or more gear reducer stages (5, 9) is rotatably fixed in relation to said output shaft (11), wherein said first gear (12) of said first gear reducer stage (5) is arranged to mesh with a second gear (15) of said first gear reducer stage (5), and wherein said second gear (15) is suspended by said mounting device (21).

4. A tubular motor drive (1) according to claim 3, wherein said second gear (15) of said first gear reducer stage (5) is rotatably fixed in relation to a first gear (13) of a second gear reducer stage (9) of said two or more gear reducer stages (5, 9), so that said first gear (13) of said second gear reducer stage (9) is also suspended by said mounting device (21).

5. A tubular motor drive (1) according to any of claims 2 to 5, wherein said mounting device (21) comprises housing means (14) substantially encircling said first gear set (3).

6. A tubular motor drive (1) according to any of the preceding claims, wherein meshing gears (12, 15) of a first gear reducer stage (5) of said two or more gear reducer stages (5, 9) are formed as helical gears.

7. A tubular motor drive (1) according to any of the preceding claims, wherein said common centrally arranged drive connection (10) comprises a wall (17) separating said first gear set (3) from said second gear set (4).

8. A tubular motor drive (1) according to any of the preceding claims, wherein said common centrally arranged drive connection (10) comprises a second gear (16) of a gear reducer stage of said two or more gear reducer stages (5, 9) and a sun gear (22) of a first planetary gear stage (24) of said second gear set (4) and wherein said second gear (16) of said gear reducer stage is rotatably fixed in relation to said sun gear (22) of said first planetary gear stage (24).

9. A tubular motor drive (1) according to claim 8, wherein said output shaft (11) is substantially coaxial with said second gear (16) of said gear reducer stage of said two or more gear reducer stages (5, 9) and said sun gear (22) of said first planetary gear stage (24) of said second gear set (4).

10. A screening device (8) for screening an architectural opening such as a window, comprising a tubular motor drive (1) according to any of the previous claims.

## Patentansprüche

1. Röhrenförmiger Motorantrieb (1) für eine Abschirmvorrichtung (8), wobei der röhrenförmige Motorantrieb (1) Folgendes umfasst:
einen Elektromotor (2), der eine Ausgangswelle (11) umfasst,
einen ersten Zahnradsatz (3), der als ein Reduktionsgetriebe ausgebildet ist, das zwei oder mehr Reduktionsgetriebestufen (5, 9) umfasst, die dafür eingerichtet sind, von der Ausgangswelle (11) angetrieben zu werden, wobei jede der zwei oder mehr Reduktionsgetriebestufen (5, 9) wenigstens zwei ineinandergreifende Zahnräder (12, 13, 15, 16) umfasst, die unterschiedliche Moduln haben, und wobei die Drehachsen der wenigstens zwei ineinandergreifenden Zahnräder (12, 13, 15, 16) in Bezug auf die Ausgangswelle (11) feststehend sind,
einen zweiten Zahnradsatz (4), der als ein Planetengetriebe ausgebildet ist, das eine oder mehrere Planetengetriebestufen (6) umfasst,
**dadurch gekennzeichnet, dass**
der erste Zahnradsatz (3) dafür eingerichtet ist, den zweiten Zahnradsatz (4) über eine gemeinsame zentrisch angeordnete Antriebsverbindung (10) anzutreiben, die unabhängig von der Ausgangswelle (11) aufgehängt ist.

2. Röhrenförmiger Motorantrieb (1) nach Anspruch 1, wobei die gemeinsame zentrisch angeordnete Antriebsverbindung (10) durch eine Halterungsvorrichtung (21) aufgehängt ist, die abnehmbar mit dem Elektromotor (2) verbunden ist.

3. Röhrenförmiger Motorantrieb (1) nach Anspruch 2, wobei ein erstes Zahnrad (12) einer ersten Reduktionsgetriebestufe (5) der zwei oder mehr Reduktionsgetriebestufen (5, 9) relativ zur Ausgangswelle (11) bezüglich Drehungen feststehend ist, wobei das erste Zahnrad (12) der ersten Reduktionsgetriebestufe (5) dafür eingerichtet ist, mit einem zweiten Zahnrad (15) der ersten Reduktionsgetriebestufe (5) ineinanderzugreifend, und wobei das zweite Zahnrad (15) durch die Halterungsvorrichtung (21) aufgehängt ist.

4. Röhrenförmiger Motorantrieb (1) nach Anspruch 3, wobei das zweite Zahnrad (15) der ersten Reduktionsgetriebestufe (5) relativ zu einem ersten Zahnrad (13) einer zweiten Reduktionsgetriebestufe (9) der zwei oder mehr Reduktionsgetriebestufen (5, 9) bezüglich Drehungen feststehend ist, so dass das erste Zahnrad (13) der zweiten Reduktionsgetriebestufe (9) ebenfalls durch die Halterungsvorrichtung (21) aufgehängt ist.

5. Röhrenförmiger Motorantrieb (1) nach einem der Ansprüche 2 bis 5, wobei die Halterungsvorrichtung (21) ein Gehäusemittel (14) umfasst, das im Wesentlichen den ersten Zahnradsatz (3) umgibt.

6. Röhrenförmiger Motorantrieb (1) nach einem der vorhergehenden Ansprüche, wobei ineinandergreifende Zahnräder (12, 15) einer ersten Reduktionsgetriebestufe (5) der zwei oder mehr Reduktionsgetriebestufen (5, 9) als spiralverzahnte Zahnräder ausgebildet sind.

7. Röhrenförmiger Motorantrieb (1) nach einem der vorhergehenden Ansprüche, wobei die gemeinsame zentrisch angeordnete Antriebsverbindung (10) eine Wand (17) umfasst, die den ersten Zahnradsatz (3) vom zweiten Zahnradsatz (4) trennt.

8. Röhrenförmiger Motorantrieb (1) nach einem der vorhergehenden Ansprüche, wobei die gemeinsame zentrisch angeordnete Antriebsverbindung (10) ein zweites Zahnrad (16) einer Reduktionsgetriebestufe der zwei oder mehr Reduktionsgetriebestufen (5, 9) und ein Sonnenrad (22) einer ersten Planetengetriebestufe (24) des zweiten Zahnradsatzes (4) umfasst, und wobei das zweite Zahnrad (16) der Reduktionsgetriebestufe relativ zum Sonnenrad (22) der ersten Planetengetriebestufe (24) bezüglich Drehungen feststehend ist.

9. Röhrenförmiger Motorantrieb (1) nach Anspruch 8, wobei die Ausgangswelle (11) im Wesentlichen koaxial mit dem zweiten Zahnrad (16) der Reduktionsgetriebestufe der zwei oder mehr Reduktionsgetriebestufen (5, 9) und dem Sonnenrad (22) der ersten Planetengetriebestufe (24) des zweiten Zahnradsatzes (4) ist.

10. Abschirmvorrichtung (8) zum Abschirmen einer Gebäudeöffnung, wie etwa einem Fenster, die einen röhrenförmigen Motorantrieb (1) nach einem der vorhergehenden Ansprüche umfasst.

## Revendications

1. Entraînement de moteur tubulaire (1) pour un dispositif d'écran (8), ledit entraînement de moteur tubulaire (1) comprend
un moteur électrique (2) comportant un arbre de sortie (11),
un premier train d'engrenages (3) formé en tant que réducteur de vitesse comprenant au moins deux étages réducteurs de vitesse (5, 9) agencés pour être entraînés par ledit arbre de sortie (11), dans lequel chacun desdits au moins deux étages réducteurs de vitesse (5, 9) comprend au moins deux engrenages (12, 13, 15, 16) ayant un module différent et dans lequel l'axe de rotation desdits au moins deux engrenages (12, 13, 15, 16) sont fixés par rapport audit arbre de sortie (11),
un deuxième train d'engrenages (4) formé en tant qu'engrenage planétaire comprenant un ou plusieurs étages d'engrenage planétaire (6),
**caractérisé en ce que**
ledit premier train d'engrenages (3) est agencé pour entraîner ledit deuxième train d'engrenages (4) via une liaison d'entraînement commune agencée au centre (10) suspendue de manière indépendante dudit arbre de sortie (11).

2. Entraînement de moteur tubulaire (1) selon la revendication 1, dans lequel ladite liaison d'entraînement commune agencée au centre (10) est suspendue par un dispositif de montage (21) relié de manière amovible audit moteur électrique (2).

3. Entraînement de moteur tubulaire (1) selon la revendication 2, dans lequel un premier engrenage (12) d'un premier étage réducteur de vitesse (5) parmi lesdits au moins deux étages réducteurs de vitesse (5, 9) est fixé de manière rotative par rapport audit arbre de sortie (11), dans lequel ledit premier engrenage (12) dudit premier étage réducteur de vitesse (5) est agencé pour s'engrener avec un deuxième engrenage (15) dudit premier étage réducteur de vitesse (5), et dans lequel ledit deuxième engrenage (15) est suspendu par ledit dispositif de montage (21).

4. Entraînement de moteur tubulaire (1) selon la revendication 3, dans lequel ledit deuxième engrenage (15) dudit premier étage réducteur de vitesse (5) est fixé de manière rotative par rapport à un premier engrenage (13) d'un deuxième étage réducteur de vitesse (9) parmi lesdits au moins deux étages réducteurs de vitesse (5, 9), de sorte que ledit premier engrenage (13) dudit deuxième étage réducteur de vitesse (9) est aussi suspendu par ledit dispositif de montage (21).

5. Entraînement de moteur tubulaire (1) selon l'une quelconque des revendications 2 à 5, dans lequel ledit dispositif de montage (21) comprend des moyens de logement (14) encerclant sensiblement ledit premier train d'engrenages (3).

6. Entraînement de moteur tubulaire (1) selon l'une quelconque des revendications précédentes, dans lequel des engrenages (12, 15) d'un premier étage réducteur de vitesse (5) parmi lesdits au moins deux étages réducteurs de vitesse (5, 9) sont formés en tant qu'engrenages hélicoïdaux.

7. Entraînement de moteur tubulaire (1) selon l'une quelconque des revendications précédentes, dans lequel ladite liaison d'entraînement commune agencée au centre (10) comprend une paroi (17) séparant ledit premier train d'engrenages (3) dudit deuxième train d'engrenages (4).

8. Entraînement de moteur tubulaire (1) selon l'une quelconque des revendications précédentes, dans lequel ladite liaison d'entraînement commune agencée au centre (10) comprend un deuxième engrenage (16) d'un étage réducteur de vitesse parmi lesdits au moins deux étages réducteurs de vitesse (5, 9) et un engrenage solaire (22) d'un premier étage d'engrenage planétaire (24) dudit deuxième train d'engrenages (4) et dans lequel ledit deuxième engrenage (16) dudit étage réducteur de vitesse est fixé de manière rotative par rapport audit engrenage solaire (22) dudit premier étage d'engrenage planétaire (24).

9. Entraînement de moteur tubulaire (1) selon la revendication 8, dans lequel ledit arbre de sortie (11) est sensiblement coaxial avec ledit deuxième engrenage (16) dudit étage réducteur de vitesse parmi lesdits au moins deux étages réducteurs de vitesse (5, 9) et ledit engrenage solaire (22) dudit premier étage d'engrenage planétaire (24) dudit deuxième train d'engrenages (4).

10. Dispositif d'écran (8) pour tamiser une ouverture architecturale telle qu'une fenêtre, comprenant un entraînement de moteur tubulaire (1) selon l'une quelconque des revendications précédentes.
